# EUROPEAN PATENT APPLICATION

(11) **EP 4 006 097 A1**
(43) Date of publication of application: **01.06.2022**
(21) Application number: 20846413.1
(22) Date of filing: 30.07.2020
(51) Int. Cl.: C08L 1/02, C08K 5/21, C08K 7/02, C08L 23/26

(54) **METHOD FOR PRODUCING RESIN COMPOSITION**

(30) Priority: 31.07.2019 JP 2019140652
(71) Applicant: Nippon Paper Industries Co., Ltd., Tokyo 114-0002 (JP)
(72) Inventor: FUKUDA Yujiroh, Tokyo 114-0002 (JP); KAKUTA Io, Tokyo 114-0002 (JP)
(74) Representative: Kuhnen & Wacker Patent- und Rechtsanwaltsbüro PartG mbB
(86) International application number: PCT/JP2020/029191
(87) International publication number: WO 2021/020494

(57) **Abstract**

This method has a first kneading step in which cellulose fibers having a weighted-average fiber length of 0.20mm to 1.50 mm, a compatibilizing resin, and urea are introduced into a kneader and kneaded.

## Description

### Technical Field

The present invention relates to a method for producing a polyolefin resin containing miniaturized cellulose fibers, particularly a polypropylene resin composition.

### Background Art

Cellulose in the fine fiber form obtained by finely loosening plant fibers includes microfibrillated cellulose and cellulose nanofibers, and is fine fibers with a fiber diameter of about 1 nm to several 10 µm. Cellulose in the fine fiber form is suitably used as a reinforcing material of a resin composition because it is lightweight, has high strength and high elastic modulus, and has a low linear thermal expansion coefficient.

The cellulose in the fine fiber form is usually obtained in a state of being dispersed in water, and it has been difficult to uniformly mix the cellulose in the fine fiber form with a resin or the like. Therefore, attempts have been made to chemically modify cellulose raw materials in order to improve affinity and miscibility with a resin.

For example, in Patent Literature 1, a cellulose raw material in which a part of hydroxy groups of cellulose is substituted with a carbamate group is obtained by heat-treating a cellulose raw material and urea, and the cellulose raw material is miniaturized by a mechanical treatment to obtain cellulose in the fine fiber form. The cellulose in the fine fiber form obtained by this method has low hydrophilicity and high affinity with a resin or the like having low polarity as compared with conventional cellulose in the fine fiber form, and therefore is highly uniformly dispersed in the resin to give a composite having high strength.

However, there has been a demand for a method for producing a resin composition capable of obtaining a resin molded body having a higher bending elastic modulus and a higher bending strength.

### Citation List

### Patent Literature

Patent Literature 1: JP 2019-1876 A

### Summary of Invention

### Technical Problem

An object of the present invention is to provide a method for producing a resin composition capable of obtaining a resin molded body having a high bending elastic modulus and a high bending strength.

### Solution to Problem

The present invention provides (1) to (4) shown below.
(1) A method for producing a resin composition, including a first kneading step of charging cellulose fibers having a weighted average fiber length (length average fiber length) of 0.20 mm to 1.50 mm, a compatibilizing resin, and urea into a kneader and kneading a mixture.
(2) The method for producing a resin composition according to (1), further including a second kneading step of kneading a kneaded product obtained in the first kneading step and a resin for dilution.
(3) The method for producing a resin composition according to (1) or (2), wherein a blending amount of the urea to be charged into the kneader in the first kneading step is 10 to 100% by weight with respect to 100% by weight of a total amount of a cellulose fiber component including cellulose and hemicellulose in the cellulose fibers.
(4) The method for producing a resin composition according to any one of (1) to (3), wherein a blending amount of a cellulose fiber component including cellulose and hemicellulose in the cellulose fibers to be charged into the kneader in the first kneading step is 35 to 85% by weight with respect to a total amount of the cellulose fibers, the compatibilizing resin, and the urea.

### Advantageous Effects of Invention

According to the present invention, it is possible to provide a method for producing a resin composition capable of obtaining a resin molded body having a high bending elastic modulus and a high bending strength.

### Brief Description of Drawings

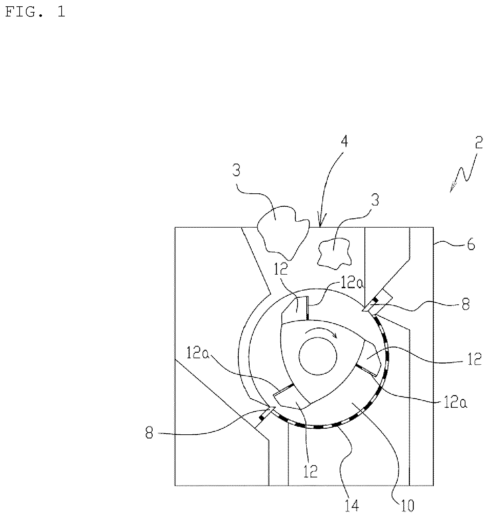

FIG. 1 is a diagram showing an outline of a pulverizer that can be used in a production method of the present invention.

### Description of Embodiments

Hereinafter, the method for producing a resin composition of the present invention will be described with reference to a drawing. In the present invention, "to" includes end values. That is, "X to Y" includes values X and Y at both ends thereof.

The method for producing a resin composition of the present invention includes a first kneading step of charging cellulose fibers having a weighted average fiber length (length average fiber length) of 0.20 mm to 1.50 mm, a compatibilizing resin, and urea into a kneader and kneading the mixture.

### (Cellulose Fiber)

The cellulose fiber used in the present invention has a weighted average fiber length (length average fiber length) in the range of 0.2 to 1.5 mm, preferably 0.3 to 1.0 mm. Such cellulose fibers can be obtained, for example, by pulverizing or beating a cellulose raw material.

### (Cellulose Raw Material)

In the present invention, the cellulose raw material refers to various forms of materials mainly composed of cellulose, and contains lignocellulose (NUKP), and examples thereof include pulp (bleached or unbleached wood pulp, bleached or unbleached non-wood pulp, pulp derived from plants such as refined linter, jute, Manila hemp, and kenaf, and the like), natural cellulose such as cellulose produced by microorganisms such as acetobacter, regenerated cellulose reprecipitated after dissolving cellulose in some solvent such as a cuprammonium solution or a morpholine derivative, fine cellulose obtained by depolymerizing cellulose by subjecting the cellulose raw material to hydrolysis, alkali hydrolysis, enzymolysis, blasting, mechanical processing such as vibratory ball milling, or the like, various cellulose derivatives, and the like.

Note that lignocellulose is a complex carbohydrate polymer that constitutes cell walls of plants, and is mainly composed of polysaccharide cellulose and hemicellulose, and aromatic polymer lignin. The content of lignin can be adjusted by subjecting pulp or the like as a raw material to delignification or bleaching.

In the present invention, when pulp is used as the cellulose raw material, either unbeaten or beaten may be used, but it is preferable to use beaten pulp. As a result, it can be expected that specific surface area of the pulp increases and urea reaction amount increases. As the degree of beating treatment, freeness (C.S.F) is preferably 400 mL or less, and more preferably about 100 mL to 200 mL. At a freeness exceeding 400 mL, the effect cannot be exhibited, and at a freeness of less than 100 mL, cellulose fibers are shortened due to damage, thus an effect of improving strength is inhibited when the cellulose fibers are formed into a reinforced resin. Also, by performing the beating treatment, after performing washing treatment and drying treatment described later, a pulverization step described later may be omitted when the weighted average fiber length (length average fiber length) falls within the range of 0.2 to 1.5 mm, preferably 0.3 to 1.0 mm.

Examples of beating treatment method include mechanically (dynamically) treating pulp fibers using a known beating machine. As the beating machine, a beating machine usually used in beating pulp fibers can be used, and examples thereof include a Niagara beater, a PFI mill, a disk refiner, a conical refiner, a ball mill, a stone mill, a sand grinder mill, an impact mill, a high pressure homogenizer, a low pressure homogenizer, a dyno mill, an ultrasonic mill, a Kanda grinder, an attritor, a vibration mill, a cutter mill, a jet mill, a disintegrator, a household juicer mixer, and a mortar. Among them, a Niagara beater, a disk refiner, and a conical refiner are preferable, and a disk refiner and a conical refiner are further preferable.

### (Dehydration)

In the washing treatment, dehydration may be performed as necessary. As a dehydration method, a pressure dehydration method using a screw press, a reduced pressure dehydration method by volatilization or the like can be also performed, but a centrifugal dehydration method is preferable from the viewpoint of efficiency. The dehydration is preferably performed until solid content in the solvent reaches about 10 to 60%.

### (Drying)

The cellulose fiber used in the present invention is subjected to a drying treatment after the dehydration step and before being used in a pulverization step performed as necessary. The drying treatment can be performed using, for example, a microwave dryer, a blower dryer, or a vacuum dryer, but a dryer capable of drying while stirring, such as a drum dryer, a paddle dryer, a Nauta mixer, or a batch dryer with stirring blades, is preferable. The drying is preferably performed until water content of the cellulose fibers reaches about 1 to 5%.

One of the features of the present invention is kneading by simultaneous addition of urea together with cellulose fibers and a compatibilizing resin. Mechanism of a phenomenon in which the strength of the cellulose fibers in the polyolefin resin is improved by this operation has not been clarified at the present time, but a part thereof can be explained by considering as follows. That is, urea is decomposed into ammonia and isocyanic acid in a state in which temperature exceeds 135°C, and it is considered that when urea is kneaded simultaneously with cellulose fibers, an unmodified hydroxyl group newly appearing from the inside of the cellulose fibers by kneading and the generated isocyanic acid react with each other to promote formation of a urethane bond, and it is presumed that hydrophobicity is enhanced as compared with cellulose fibers not subjected to urea treatment. Further, it is considered that it is possible to promote ionic bond between an amino group newly introduced on the surface of the cellulose fiber by the urea treatment and carboxylic acid of the compatibilizing resin and to more firmly form a composite of the cellulose fibers and the compatibilizing resin by melt-kneading simultaneously with the compatibilizing resin having an acid anhydride.

A blending amount of urea necessary for achieving the mechanism described above is preferably 10 to 100% by weight, more preferably 20 to 100% by weight, and further preferably 30 to 70% by weight with respect to 100% by weight of a total amount of a cellulose fiber component of cellulose and hemicellulose contained in the cellulose fibers (hereinafter, sometimes referred to as "cellulose amount"), from the viewpoint of improving bending elastic modulus and suppressing aggregation of fibers, and decrease in bending strength due to an excessively large blending amount of urea.

### (Compatibilizing Resin)

One of the features of the present invention is kneading by simultaneous addition of a compatibilizing resin together with cellulose fibers and urea. The compatibilizing resin functions to enhance uniform mixing and adhesion between hydrophilic cellulose fibers and hydrophobic polyolefin resin for dilution. The compatibilizing resin used in the present invention (hereinafter, sometimes referred to as "resin for master batch") is a polymer resin having a low molecular weight dicarboxylic acid capable of forming an acid anhydride such as maleic acid, succinic acid or glutaric acid on a polyolefin chain such as polypropylene or polyethylene. Among them, maleic anhydride-modified polypropylene (MAPP) or maleic anhydride-modified polyethylene (MAPE) to which maleic acid is added is preferably used together with polypropylene or polyethylene.

Elements that determine characteristics as the compatibilizing resin include an addition amount of dicarboxylic acid and a weight average molecular weight of the polyolefin resin as a base material. A polyolefin resin having a large addition amount of a dicarboxylic acid increases compatibility with a hydrophilic polymer such as cellulose, but the molecular weight as a resin decreases in the addition process, and strength of a molded product decreases. As an optimum balance, the addition amount of the dicarboxylic acid is 20 to 100 mg KOH/g, and further preferably 45 to 65 mg KOH/g. When the addition amount is small, an ionic bond amount with urea in the resin is small. In addition, when the addition amount is large, strength as a reinforced resin is not achieved due to self-aggregation due to hydrogen bonding between carboxyl groups in the resin or the like, or decrease in the molecular weight of the olefin resin as a base material due to an excessive addition reaction. The molecular weight of the polyolefin resin is preferably 35,000 to 250,000, and further preferably 50,000 to 100,000. When the molecular weight is smaller than this range, the strength as the resin decreases, and when the molecular weight is larger than this range, viscosity increase during melting is large, workability during kneading is reduced, and molding defects are caused.

Addition amount of the compatibilizing resin having the above characteristics is preferably 10 to 70% by weight, and further preferably 20 to 50% by weight with respect to the cellulose amount. When the addition amount is more than 70% by weight, it is considered that inhibition of introduction of isocyanic acid derived from urea into cellulose fibers and formation of a composite of a compatibilizer and urea are promoted, and the effect of the present invention is not exhibited.

Also, the compatibilizing resins may be used alone, or may be used as a mixed resin of two or more kinds.

### (Pretreatment of First Kneading Step - Pulverization Step)

In the present invention, the pulverization step may be provided before the first kneading step described later. By using the cellulose fibers pulverized in the pulverization step, fiber masses of the cellulose fibers are appropriately loosed at the time of charging the cellulose fibers into the kneader, and it is possible to suppress occurrence of a bridge (clogging) at a charging port (chute part) and poor biting of pulp into a screw.

An outline of a pulverizer that can be used in the pulverization step of the present invention is shown in FIG. 1. A pulverizer 2 shown in FIG. 1 includes a main body 6 having a charging port 4 for charging a material to be pulverized, a fixed blade 8 fixed to the main body 6, rotary blades 12 having blades 12a for drawing the material to be pulverized charged from the charging port 4 into a pulverizing chamber 10, and a screen 14 for adjusting a discharge particle size of the pulverized material.

In the pulverization step of the present invention, a cotton-like mass 3 of cellulose fibers in a dry state is charged from the charging port 4 of the pulverizer 2. The cotton-like mass 3 of cellulose fibers charged is drawn into the pulverizing chamber 10 by the rotary blades 12, and is pulverized by a shearing force acting between the blade 12a of the rotary blade 12 and the fixed blade 8. Further, the cellulose fibers were pulverized while being pressed against the screen 14 by the whole rotary blades 12, and when the diameter becomes smaller than the diameter of the screen 14, the cellulose fibers are discharged from the pulverizer 2. The cellulose fibers with a diameter equal to or larger than the diameter of screen 14 is lifted by the rotary blades 12, and pulverization is repeated.

Here, in the present invention, it is preferable to use a screen 14 with a diameter of 1 mm or more and 5 mm or less, preferably a diameter of 3 mm or more and 5 mm or less. When the diameter of the screen is too small, the average fiber length of the cellulose fibers obtained through the screen becomes too short, so that a molded body to be obtained has low bending strength. In addition, when the screen diameter is too large, the amount of the cotton-like masses with long average fiber length increases, so that reduction in workability due to poor biting properties into the kneader, and the amount of non-defibrated fibers increases in the molded body to be obtained, resulting in decrease in strength. The cellulose fibers thus obtained preferably have a weighted average fiber length (length average fiber length) of about 0.20 to 1.5 mm, more preferably 0.3 to 1.0 mm.

As the cellulose fibers to be pulverized in the pulverization step, those that have been dried are preferably used from the viewpoint of reducing drying load during kneading. The dried cellulose fibers before being charged into the pulverizer 2 are usually a cotton-like fiber mass.

Examples of the pulverizer that can be used in the pulverization step of the present invention include UGO3-280XKFT manufactured by Horai Co., Ltd.

### (First Kneading Step)

In the first kneading step of the present invention, cellulose fibers having a weighted average fiber length of 0.20 to 1.50 mm, preferably 0.30 to 1.00 mm, a compatibilizing resin, and urea are simultaneously charged into a kneader, and melt-kneaded. The weighted average fiber length (length average fiber length) of the cellulose fibers can be measured using a fiber tester (manufactured by L&W) or the like. Various commercially available feeders and side feeders can be used when charging the ingredients into the kneader. When the compatibilizing resin and urea are powdered in advance, the cellulose fibers, the compatibilizing resin, and urea can be mixed by a commercially available mixer or the like before being charged. Even when the compatibilizing resin or the like is not powdered, the compatibilizing resin or the like can be charged by preparing a plurality of feeders, like a feeder for pellets and a feeder for cellulose fibers. In the first kneading step, the blending amount of the cellulose fiber component among the cellulose fibers to be charged into the kneader is preferably 35 to 85% by weight and more preferably 40 to 75% by weight with respect to a total amount of the cellulose fibers, the compatibilizing resin, and urea.

### (Kneader)

As the kneader used in the first kneading step of the present invention, a kneader capable of melt-kneading the compatibilizing resin and urea and having a strong kneading force for promoting nano-defibration of the cellulose fibers is preferable, and a multi-screw kneader such as a twin screw kneader and a four screw kneader is used, and a plurality of kneading, rotors, and the like are desirably included in parts constituting a screw. A kneader such as a bench roll, a Banbury mixer, a kneader, or a planetary mixer may be used as long as a kneading force equivalent to the one described above can be secured.

Set temperature of the melt-kneading can be adjusted in accordance with the melting temperature of the compatibilizing resin to be used. When maleic anhydride-modified polypropylene suitable for the present invention is used as the compatibilizing resin, the set temperature is preferably 135°C or more for promoting decomposition of urea, and further preferably 160°C or more at which the compatibilizing resin having a dicarboxylic acid residue capable of forming an acid anhydride is melted and a part of terminals is cyclized by dehydration. By the above temperature setting, isocyanic acid is generated from urea to form a urethane bond with the unmodified hydroxyl group on the cellulose fiber. Whereby, introduction of an amino group on the cellulose fiber is achieved, and it becomes possible to promote ionic interaction with the compatibilizing resin. In addition, when the dicarboxylic acid residue in the compatibilizing resin is cyclized to form an acid anhydride at the above temperature, an esterification reaction with cellulose fibers occurs, and a stronger resin composite can be formed. On the other hand, when the kneading temperature exceeds 200°C, deterioration of the polypropylene resin as a base material starts and the strength decreases.

In the present invention, the cellulose fibers, the compatibilizing resin and the urea charged into the kneader in the first kneading step are melt-kneaded, and at least a part of the cellulose fibers is defibrated by a shearing force generated during the melt-kneading to prepare a resin composition containing cellulose nanofibers.

The cellulose nanofibers are preferably fine fibers with a fiber diameter of about 1 to 1000 nm and an aspect ratio of 100 or more. In the resin composition according to the present invention, the cellulose nanofibers may occupy more than half, and the resin composition may contain non-defibrated fibers.

### (Second Kneading Step)

The method for producing a resin composition of the present invention may further include a second kneading step of kneading the kneaded product obtained in the first kneading step and the resin for dilution. When the second kneading step is included, the kneaded product prepared in the first kneading step can be used as a master batch.

### (Resin for Dilution)

As the resin for dilution, it is possible to add a thermoplastic resin which contains a polyolefin resin such as polyethylene, polypropylene (hereinafter also referred to as "PP"), an ethylene-propylene copolymer, polyisobutylene, polyisoprene or polybutadiene as a main component, has hydrophobicity relatively similar to that of the polyolefin resin depending on the purpose, and has a melting temperature of about 100 to 200°C. Examples of the thermoplastic resin that can be added include polystyrene, polyvinylidene chloride, fluororesin, (meth)acrylic resins, polyamide (PA, nylon resin), polyester, polylactic acid, polyglycolic acid, copolymer resin of lactic acid and an ester, acrylonitrile-butadiene-styrene copolymer (ABS resin), polycarbonate, polyphenylene oxide, (thermoplastic) polyurethane, polyacetal, vinyl ether resin, polysulfone resins, cellulose resins (triacetylated cellulose, diacetylated cellulose, and the like), and the like.

When MAPP is used as the compatibilizing resin (resin for master batch), polypropylene is preferably used as the resin for dilution.

When the kneaded product obtained in the first kneading step is used as a master batch, a resin composition further containing a resin for dilution can be obtained by adding the resin for dilution to the master batch and melt-kneading the mixture. In the case of adding the resin for dilution and melt-kneading the mixture, both components may be mixed at room temperature without being heated and then melt-kneaded, or may be mixed while being heated and melt-kneaded.

As the kneader in the case of adding the resin for dilution and melt-kneading the mixture, the same one as the kneader used in the first kneading step can be used. Also, melt-kneading temperature can be adjusted in accordance with the compatibilizing resin used in the first kneading step. Heating set temperature during the melt-kneading is preferably a minimum process temperature recommended by a thermoplastic resin supplier ± about 10°C. When polypropylene is used as the resin for dilution, the melt-kneading temperature is preferably set to 140 to 230°C, and more preferably 160 to 200°C. By setting the mixing temperature to this temperature range, the cellulose fibers and the resin can be uniformly mixed.

The resin composition produced by the production method of the present invention may be further blended with, for example, surfactant; polysaccharides such as starches and alginic acid; natural proteins such as gelatin, glue, and casein; inorganic compounds such as tannin, zeolite, ceramics, and metal powder; colorant; plasticizer; flavoring agent; pigment; flow modifier; leveling agent; conductive agent; antistatic agent; ultraviolet absorber; ultraviolet dispersant; and additives such as deodorant and antioxidant. As a content ratio of the optional additives, they may be appropriately contained as long as the effect of the present invention is not impaired.

### (Resin Composition)

The resin composition obtained by the production method of the present invention may be the kneaded product (master batch) obtained in the first kneading step, or may be the resin composition obtained in the second kneading step of kneading the kneaded product (master batch) obtained in the first kneading step and the resin for dilution.

According to the present invention, it is possible to provide a method for producing a resin composition capable of obtaining a resin molded body having a high bending elastic modulus and a high bending strength.

### Examples

Hereinafter, the present invention will be described in more detail by way of examples, but the present invention is not limited thereto.

### (Measurement of Bending Elastic Modulus and Bending Strength)

Resin compositions obtained in Examples and Comparative Examples were charged into a pelletizer to obtain pellet-shaped resin molded bodies. A pellet-shaped resin molded body in an amount of 150 g was charged into a small molding machine ("MC15" manufactured by Xplore Instruments BV), and a bar test piece was molded under conditions of a heating cylinder temperature of 200°C and a mold temperature of 40°C. Bending elastic modulus and bending strength of the obtained test pieces (thickness 4 mm, parallel portion length 80 mm) were measured at a test speed of 10 mm/min and a gauge length of 64 mm, using a precision universal testing machine ("Autograph AG-Xplus" manufactured by Shimadzu Corporation). Of the measured values, a ratio of the measured value of each sample when bending elastic modulus value and bending strength value of PP, which is a diluted resin, are set to 100 is defined as a reinforcement ratio, and the results are shown in Table 1. When the sample has a bending elastic modulus of 130 or more and a bending strength of 118 or more, it shows that the sample is excellent in strength.

### (Kneader and Operating Conditions Used for Production of Master Batch and Resin Composition)

Twin screw kneader "MFU15TW-45HG-NH" manufactured by TECHNOVEL CORPORATION
Screw diameter: 15 mm, L/D: 45, treatment speed: 300 g/hr

The screw rotation speed was 200 rpm.

### (Example 1)

### (Preparation of Cellulose Fiber)

Unbeaten water-containing softwood unbleached kraft pulp (NUKP) in an amount of 20 kg (solid content: 10 kg) was charged into a stirrer ("FM150L" manufactured by Nippon Coke & Engineering Co., Ltd.), then stirring was started, and dehydration was performed at 80°C under reduced pressure. Water content of the obtained cellulose fibers was measured with an infrared moisture meter. The water content was 2.5% by weight. Also, the fiber length of the cellulose fibers was measured with a fiber tester (manufactured by L&W), and the weighted average fiber length was 1.00 mm.

### (Materials Used for Production of Master Batch and Resin Composition)

(a) Cellulose fiber
(b) Compatibilizing resin (resin for master batch)
   - Maleic anhydride-modified polypropylene (MAPP): (TOYO-TAC PMA-H1000P manufactured by Toyobo Co., Ltd.: addition amount of dicarboxylic acid 57 mg KOH/g)
(c) Urea: (manufactured by Wako Pure Chemical Industries, Ltd.)
(d) Resin for dilution
   - Polypropylene (PP): (PP MA04A manufactured by Japan Polypropylene Corporation)

### (Production of Master batch)

The cellulose fibers (22 g as absolute dry matter, of which the cellulose amount including cellulose and hemicellulose is 20 g), powdered compatibilizing resin (MAPP: 6 g), and powdered urea (6 g: blending amount of 30% with respect to the cellulose amount) were put in a polyethylene bag, and mixed by shaking. The obtained mixture in an amount of 34 g was charged into a kneader using a feeder (manufactured by TECHNOVEL CORPORATION) attached to the above-described twin screw kneader, and kneaded at 180°C to produce a master batch.

### (Production of Resin Composition)

The obtained master batch and a resin for dilution (PP) were mixed in such a manner that the amount of cellulose fiber component derived from cellulose fiber was 10% of a total amount of the resin (compatibilizing resin and resin for dilution), cellulose fibers and urea, and the mixture was kneaded at 180°C by the twin screw kneader to obtain a resin composition.

### (Example 2)

A master batch and a resin composition were produced in the same manner as in Example 1 except that the blending amount of urea was changed to 14 g (blending amount of 70% with respect to the cellulose amount).

### (Example 3)

A master batch and a resin composition were produced in the same manner as in Example 1 except that the blending amount of urea was changed to 20 g (blending amount of 100% with respect to the cellulose amount).

### (Example 4)

### (Preparation of Cellulose Fiber)

Water-containing softwood unbleached kraft pulp (NUKP) beaten until CSF became 150 mL in an amount of 20 kg (solid content: 10 kg) was charged into a stirrer ("FM150L" manufactured by Nippon Coke & Engineering Co., Ltd.), then stirring was started, and dehydration was performed at 80°C under reduced pressure. Water content of the obtained cellulose fibers was measured with an infrared moisture meter. The water content was 2.5% by weight. Also, the fiber length of the cellulose fibers was measured with a fiber tester (manufactured by L&W), and the weighted average fiber length was 0.31 mm.

A master batch and a resin composition were produced in the same manner as in Example 1 except that the cellulose fibers obtained as described above were used.

### (Example 5)

A master batch and a resin composition were produced in the same manner as in Example 4 except that the blending amount of urea was 14 g (blending amount of 70% with respect to the cellulose amount).

### (Example 6)

A master batch and a resin composition were produced in the same manner as in Example 1 except that the blending amount of urea was 2 g (blending amount of urea was 10% with respect to the cellulose amount).

### (Comparative Example 1)

A master batch and a resin composition were produced in the same manner as in Example 1 except that urea was not blended.

### (Comparative Example 2)

The cellulose fibers of Example 1 (22 g as absolute dry matter), powdered PP (6 g) in place of the compatibilizing resin, and powdered urea (6 g: blending amount of 30% with respect to the cellulose amount) were put in a polyethylene bag, and mixed by shaking. The obtained mixture in an amount of 34 g was charged into a kneader using a feeder (manufactured by TECHNOVEL CORPORATION) attached to the above-described twin screw kneader, and kneaded at 180°C to produce a kneaded product containing cellulose fibers and PP.

The obtained kneaded product, MAPP and a resin for dilution (PP) were mixed in such a manner that the amount of cellulose fiber component derived from cellulose fiber was 10% of a total amount of the resins (MAPP, PP used in place of compatibilizing resin, and resin for dilution (PP)), cellulose fibers and urea, and the mixture was kneaded at 180°C by the twin screw kneader to obtain a resin composition. Here, blending ratio of MAPP to PP (sum of PP used in place of the compatibilizing resin and PP used as the resin for dilution) was set to 3 : 83.

### (Comparative Example 3)

The kneaded product containing cellulose fibers and PP obtained in Comparative Example 2, and a resin for dilution (PP) were mixed in such a manner that the amount of cellulose fiber component derived from cellulose fiber was 10% of a total amount of the resins, cellulose fibers and urea, and the mixture was kneaded at 180°C by the twin screw kneader to obtain a resin composition.

### (Comparative Example 4)

A master batch and a resin composition were produced in the same manner as in Example 4 except that urea was not blended.

### (Comparative Example 5)

Cellulose fibers beaten until CSF became 150 mL (22 g as absolute dry matter, of which the cellulose amount including cellulose and hemicellulose is 20 g) and powdered urea (6 g: blending amount of 30% with respect to the cellulose amount) were put in a polyethylene bag, and mixed by shaking. The obtained mixture in an amount of 28 g was charged into a kneader using a feeder (manufactured by TECHNOVEL CORPORATION) attached to the above-described twin screw kneader, and kneaded at 180°C. However, a current of the kneader exceeded the upper limit and abnormal noise occurred, thus kneading was stopped.

**[Table 1]**

| | | Reference Example (PP only) | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|---|
| Treatment of cellulose fibers | Beating treatment | - | Not performed | Not performed | Not performed | Performed | Performed | Not performed | Not performed | Not performed | Not performed | Performed | Performed |
| Urea | Addition amount (% with respect to cellulose amount) | - | 30 | 70 | 100 | 30 | 70 | 10 | 0 | 30 | 30 | 0 | 30 |
| MAPP | Addition amount (% with respect to cellulose amount) | - | 30 | 30 | 30 | 30 | 30 | 30 | 30 | 30 | 0 | 30 | 0 |
| Maleic anhydride-modified polypropylene (MAPP) | Addition method | | During kneading for master batch production | During kneading for master batch production | During kneading for master batch production | During kneading for master batch production | During kneading for master batch production | During kneading for master batch production | During kneading for master batch production | During kneading for dilution | (No addition) | During kneading for master batch production | - |
| Evaluation of resin molded body (Reinforcement ratio) | Bending elastic modulus | 100 | 139 | 142 | 138 | 133 | 151 | 130 | 113 | 127 | 123 | 122 | - |
| | Bending strength | 100 | 121 | 114 | 110 | 118 | 118 | 121 | 106 | 115 | 97 | 110 | - |

As shown in Table 1, according to the method for producing a resin composition including the first kneading step of charging the cellulose fibers, the compatibilizing resin, and urea into a kneader and kneading the mixture of the present invention, it is possible to obtain a resin composition which gives an excellent molded body having improved bending elastic modulus by adding urea in an amount of 10 to 100% by weight with respect to 100% by weight of the cellulose amount. In addition, it is possible to obtain a resin composition which gives an excellent molded body having bending strength improved by adding urea in an amount of 10 to 30% by weight with respect to 100% by weight of the cellulose amount. It is also found that this effect is further improved in bending elastic modulus by beating the pulp to be used. On the other hand, it is found that the improving effect is small in Comparative Examples 1 and 4 in which urea is not added. It is also found that the effect of improving strength is small in Comparative Examples 2 and 3 in which the compatibilizing resin is not added simultaneously with urea.

## Claims

1. A method for producing a resin composition, comprising a first kneading step of charging cellulose fibers having a weighted average fiber length of 0.20 mm to 1.50 mm, a compatibilizing resin, and urea into a kneader and kneading a mixture.

2. The method for producing a resin composition according to claim 1, further comprising a second kneading step of kneading a kneaded product obtained in the first kneading step and a resin for dilution.

3. The method for producing a resin composition according to claim 1 or 2, wherein a blending amount of the urea to be charged into the kneader in the first kneading step is 10 to 100% by weight with respect to 100% by weight of a total amount of a cellulose fiber component including cellulose and hemicellulose in the cellulose fibers.

4. The method for producing a resin composition according to any one of claims 1 to 3, wherein a blending amount of a cellulose fiber component including cellulose and hemicellulose in the cellulose fibers to be charged into the kneader in the first kneading step is 35 to 85% by weight with respect to a total amount of the cellulose fibers, the compatibilizing resin, and the urea.
